# FASCICULE DE BREVET EUROPEEN

(11) **EP 2 227 399 B1**
(45) Date de publication et mention de la délivrance du brevet: **28.04.2021**
(21) Numéro de dépôt: 08864434.9
(22) Date de dépôt: 22.12.2008
(51) Int. Cl.: B32B 17/10, B44F 1/06

(54) **VITRAGE FEUILLETÉ ET UN PROCÉDÉ POUR SON OBTENTION**
VERBUNDGLAS UND EIN VERFAHREN ZU DESSEN ERZIELUNG
LAMINATED GLAZING AND A METHOD FOR OBTAINING IT

(30) Priorité: 20.12.2007 FR 0760130
(43) Date de publication de la demande: 15.09.2010
(73) Titulaire: SAINT-GOBAIN GLASS FRANCE, 92400 Courbevoie (FR)
(72) Inventeur: PIRES, Isabelle, 60150 Thourotte (FR); GOUY, Aurélien, 60150 Le Plessis Brion (FR); BERNHEIM, Isabelle, 75017 Paris (FR)
(74) Mandataire: Saint-Gobain Recherche
(86) Numéro de dépôt international: PCT/FR2008/052397
(87) Numéro de publication internationale: WO 2009/081077

(56) Documents cités:
- EP-A- 1 129 844
- EP-A- 1 834 548
- GB-A- 463 586
- GB-A- 2 412 929
- US-A- 3 666 614
- US-A- 4 204 026

## Description

La présente invention se rapporte à un vitrage décoratif, en particulier destiné à être utilisé en cloison, vitrage d'ameublement, porte, couvercle de luminaires, plafond, revêtement de murs, garde-corps, marche d'escalier, porte de douche.

Il est connu de déposer des couches de laque sur des feuilles de verre dans un but décoratif. Une laque est un revêtement non transparent, qui peut être translucide, mais qui est généralement opaque, et qui comprend au moins une résine polymérique, au moins un pigment, et généralement des charges minérales. La résine polymérique sert à lier les pigments et les charges minérales, tandis que les pigments ont pour but de conférer la couleur et l'opacité désirées. Le verre laqué ainsi produit peut être fixé sur des parois, par exemple à l'aide d'adhésifs. Pour des raisons tenant tout à la fois à l'esthétique, la durabilité, la rayabilité et à la sécurité, ces vitrages ne peuvent toutefois pas être employés en tant que tels comme cloisons ou portes.

Il est également possible de recouvrir des cloisons en verre à l'aide de films décoratifs. L'aspect esthétique et la durabilité sont toutefois moins satisfaisants. La mise en œuvre, en particulier le dépôt du film, pose également des difficultés, surtout en cas de grandes surfaces.

La demande GB 463,586 décrit divers vitrages décoratifs comprenant deux feuilles de verre et divers décors imprimés soit sur le verre soit sur des membranes ou tissus disposés entre les deux feuilles de verre. Ces vitrages ne sont toutefois pas susceptibles de répondre aux normes actuelles en termes de sécurité, notamment en termes de résistance au choc et aux impacts. L'adhésion entre les différents éléments n'est pas non plus optimisée, ce qui entraîne des problèmes de durabilité dans le temps. Les procédés de fabrication sont en outre complexes et coûteux.

Le document EP 1 129 844 A1 décrit un vitrage feuilleté comprenant deux feuilles de verre et une feuille intercalaire polymère comprenant une feuille de PET portant une décoration prise en sandwich entre du polyuréthane ou du polyvinylbutyral, et un procédé pour sa production.

Afin d'obvier à ces inconvénients, l'invention a pour objet un vitrage feuilleté selon la revendication 1.

L'invention a également pour objet un procédé d'obtention selon la revendication 14.

Il s'est révélé que de tels assemblages permettaient de résoudre les problèmes susmentionnés : les vitrages obtenus répondent aux normes en vigueur en termes de résistance au choc et à l'impact et de durabilité. Ils répondent en particulier aux exigences de la norme EN 14449 :2005 qui définit la conformité des verres feuilletés et sont classifiés 2B2 au sens de la norme EN 12600, qui définit la résistance au choc des vitrages. Grâce à ces classifications, les vitrages décoratifs selon l'invention sont aptes à être utilisés comme cloisons. Ce point est particulièrement surprenant car, si les verres laqués d'une part, et les verres feuilletés d'autre part, étaient bien connus depuis de nombreuses années, nul n'avait imaginé qu'il était possible de feuilleter du verre laqué à l'aide de feuilles de PVB et donc de résoudre de manière peu coûteuse les problèmes liés à la sécurité et à l'esthétique.

La ou chaque couche de laque est avantageusement en contact avec la ou chaque feuille intercalaire polymère. La ou chaque couche de laque est de préférence déposée en contact avec une feuille de verre.

La ou chaque feuille intercalaire polymère est de préférence transparente.

Le vitrage est de préférence constitué de deux feuilles de verre, d'une couche de laque déposée sur une première feuille de verre, et d'une feuille intercalaire polymère en contact avec ladite couche de laque et assurant la liaison entre ladite première feuille de verre et une seconde feuille de verre.

D'autres arrangements sont toutefois possibles, par exemple comprenant trois feuilles de verre, deux feuilles intercalaires polymères étant disposées afin d'assurer la liaison entre les trois feuilles de verre, une couche de laque étant disposée sur une des feuilles de verre, en contact avec une des feuilles intercalaires. Le vitrage peut aussi être constitué de deux feuilles de verres recouvertes chacune d'une couche de laque et d'une feuille intercalaire polymère située entre ces feuilles de verre laqué, ce qui permet d'obtenir deux aspects esthétiques différents selon le côté de la cloison.

Quelque soit l'arrangement choisi, il importe en tout cas que la couche de laque soit comprise au sein du vitrage, donc ne soit pas en contact avec l'extérieur, et que le vitrage soit feuilleté, au sens où les diverses feuilles de verre formant le vitrage sont liées entre elles par une feuille intercalaire polymère en PVB. Les problèmes d'esthétique, de durabilité, de rayabilité et de sécurité sont ainsi résolus.

Dans la suite du texte, on entend par face interne une face d'une feuille de verre faisant face à une autre feuille de verre du vitrage, et par face externe une face située à l'extérieur du vitrage, donc en contact avec l'air ambiant.

La ou chaque feuille intercalaire polymère est de préférence souple afin de faciliter la fabrication du vitrage et de pouvoir répondre aux exigences habituelles en termes de résistance au choc et à l'impact.

La ou chaque feuille intercalaire polymère est constituée de polyvinylbutyral (PVB), qui présente toute une série d'avantages. Le PVB présente un indice de réfraction proche de celui du verre silico-sodo-calcique couramment employé pour la réalisation de vitrages, de sorte que la feuille intercalaire est invisible ou quasiment invisible et ne cache pas la couche de laque. Il est ainsi possible de voir la couche de laque des deux côtés du vitrage. Le PVB permet en outre d'absorber très efficacement les chocs et de retenir les fragments de verre en cas de bris du vitrage. Dans certains cas, comme expliqué dans la suite du texte, le PVB peut également conférer des propriétés d'isolation acoustique.

La ou chaque feuille intercalaire polymère présente de préférence une épaisseur comprise entre 0,1 et 10 mm, en particulier entre 0,38 et 2,28 mm, notamment entre 0,38 et 0,76 mm, l'épaisseur ayant une influence sur la résistance aux chocs. Il est possible d'obtenir une épaisseur de feuille intercalaire de 0,76 mm d'épaisseur en superposant deux feuilles de 0,38 mm chacune.

La ou chaque feuille intercalaire peut présenter des propriétés d'isolement acoustique améliorées, notamment de protection vis-à-vis des bruits solidiens et/ou aérodynamiques. Elle peut à cet égard être choisie pour respecter les critères définis dans l'une ou plusieurs des demandes EP 0 100 701, EP 0 844 075 ou EP 0 387 148. Selon la demande EP 0 100 701, la feuille intercalaire est choisie tel qu'un barreau de 9 cm de longueur et de 3 cm de largeur, constitué d'un verre feuilleté comprenant deux feuilles de verre de 4 mm d'épaisseur réunies par une feuille intercalaire de 2 mm ait une fréquence critique qui diffère au plus de 35 % de celle d'un barreau de verre ayant la même longueur, la même largeur et 4 mm d'épaisseur. La feuille intercalaire selon la demande EP 0 844 075 possède un facteur de perte tanδ supérieur à 0,6 et un module de cisaillement G' inférieur à 2.10⁷ N/cm², dans un domaine de température compris entre 10 et 60°C et un domaine de fréquence compris entre 50 et 10 000 Hz. La feuille intercalaire selon la demande EP 0 387 148 présente un amortissement à la flexion v =Δf/f_{c} supérieur à 0,15, la mesure étant effectuée en excitant par un choc un barreau de 9 cm de longueur et 3 cm de largeur fait d'un verre feuilleté où la feuille intercalaire est entre deux verres épais chacun de 4 mm, et en mesurant la fréquence de résonance du premier mode f_{c} et la largeur du pic Δf à une amplitude A/√2 où A est l'amplitude maximum à la fréquence f_{c} de telle sorte que son indice d'affaiblissement acoustique ne se différencie pour aucune des fréquences supérieures à 800 hertz de plus de 5 décibels d'un indice de référence augmentant de 9 dB par octave jusqu'à 2000 Hz et de 3 dB par octave aux fréquences supérieures.

La ou chaque feuille intercalaire est de préférence transparente ou translucide, en tout cas non opaque. Une feuille intercalaire transparente est préférée car elle permet de profiter pleinement de l'aspect de la laque. La feuille intercalaire peut être incolore ou colorée (par exemple en bleu, rouge, vert, gris). Elle peut également être imprimée, par exemple de motifs colorés opaques ou translucides, pour reproduire un décor, qui va se superposer au décor créé par la couche de laque.

Un assemblage préféré consiste à utiliser deux feuilles intercalaires polymère en PVB, entre lesquelles est insérée au moins une feuille polymère (notamment en polyéthylène téréphtalate, ou PET) sur laquelle un décor est reproduit par impression. L'aspect tridimensionnel présenté par ce type d'assemblage le rend particulièrement attrayant.

Une caractéristique importante de la laque est sa faculté à présenter une bonne adhésion avec la feuille intercalaire polymère. Les inventeurs ont pu mettre en évidence que l'adhésion devait être suffisamment élevée pour éviter toute délamination, mais pas trop élevée pour que le vitrage puisse convenablement absorber les chocs.

A cet effet, il est préférable que la couche de laque présente au moins en sa surface des fonctions chimiques susceptibles de réagir chimiquement avec les fonctions hydroxyles et/ou carbonyles. De préférence, la couche de laque présente donc en surface des fonctions de même type, c'est-à-dire hydroxyles et/ou carbonyles.

La quantité de groupements hydroxyles en surface est notamment un paramètre susceptible d'influencer cette adhésion. Ainsi, une laque préférée est telle que, par mesure en spectrométrie infrarouge de type ATR (réflexion totale atténuée), le rapport entre les aires des bandes d'absorption liées aux groupements hydroxyles et les aires des bandes d'absorption liées aux groupements alkyles ou alcanes soit supérieur ou égal à 0,4, notamment 0,5 ou 0,6. Une telle laque permet d'optimiser l'adhésion avec la feuille intercalaire en PVB, et en particulier d'obtenir une durabilité très élevée.

La tension de surface de la laque est également un paramètre important. Pour obtenir une adhésion optimale entre la laque et la feuille intercalaire polymère en PVB, la couche de laque présente de préférence une tension de surface comprise entre 30 et 70 N/mm², notamment entre 32 et 50 N/mm². La tension de surface peut être mesurée à l'aide d'encres de test commercialisées par la société Plasmatreat GmbH.

L'angle de contact d'une goutte d'un plastifiant de ladite feuille intercalaire polymère (notamment le tri-éthylène glycol di(2-ethyl hexanoate)) déposée sur la laque est de préférence inférieur ou égal à 30°.

La rugosité de la laque s'est aussi révélée être un facteur influençant l'adhésion, mais de moindre importance par rapport à la présence de fonctions chimiques précitées ou à la tension de surface. La laque présente donc de préférence une rugosité R_{z} au sens de la norme NF EN ISO 4287 :1998 comprise entre 10 et 90 micromètres, notamment entre 45 et 70 micromètres. Les paramètres de mesure sont définis dans la norme NF EN ISO 4288 :1998.

La laque du vitrage selon l'invention comprend, comme toute laque, un liant à base de résine synthétique, de nature polymérique.

Le liant est de préférence à base de résine acrylique, notamment réticulée avec de la mélamine et/ou un isocyanate. Un tel liant présente en effet une bonne adhésion avec la feuille intercalaire polymère en PVB, en particulier grâce aux fonctions carbonyles et/ou hydroxyles encore disponibles en surface après cuisson de la laque. La résine acrylique présente également une très bonne résistance à l'hydrolyse.

Le liant peut également être une résine polyuréthane, obtenue par réticulation, par un isocyanate ou un polyisocyanate, de résines hydroxylées, notamment des résines polyesters ou polyéthers, ou de préférence des résines acryliques (ou polyacrylates), lesquelles présentent une résistance aux rayonnements ultraviolets élevée. Cette combinaison particulière permet notamment d'obtenir de faibles perméabilités à l'eau, de bonnes propriétés mécaniques (par exemple en termes de résistance à la rayure), et une résistance élevée au rayonnement ultraviolet.

Le liant de la laque du vitrage selon l'invention peut également contenir ou être à base de résine(s) alkyde(s), obtenues par réaction chimique entre au moins un polyol, au moins un polyacide et au moins un acide gras ou une huile. Ces alkydes sont de préférence courts en huile, c'est-à-dire que la teneur pondérale en huile ou acide gras dans la résine est de préférence inférieure ou égale à 40%. Les polyols peuvent être par exemple des composés du glycérol ou du pentaérithritol. Les polyacides peuvent être à base d'anhydride phtalique. Les huiles peuvent être siccatives (telles que l'huile de lin, de bois ou de chine), semi-siccatives (telles que l'huile de soja, de tall, de carthame ou de ricin déshydraté), ou encore non siccatives (comme l'huile de coprah ou de ricin). Afin d'améliorer leurs propriétés de résistance à l'eau, les liants alkydes peuvent également être modifiés par des monomères tels que le styrène, le vinyltoluène ou des acrylates ou par des résines phénoliques ou époxydiques. Des résines alkydes aminoplastes réticulant sous l'effet de la chaleur sont des liants particulièrement avantageux de la laque du revêtement. Le réticulant aminoplaste est de préférence une résine urée-formol ou mélamine-formol, qui confèrent une bonne résistance à l'eau, notamment lorsqu'elles sont apportées à raison de 20 à 30% en masse par rapport au liant alkyde sec.

La laque peut également comprendre un liant à base de résine acrylique thermodurcissable, par exemple obtenue par réticulation d'une résine acrylique carboxylée par une résine époxydique, formo-phénolique ou mélamine-formol ou un isocyanate, d'une résine acrylique à fonction carboxamide par un liant époxydique ou alkyde, ou encore d'une résine acrylique à fonction époxydique par des acides ou des polyamines.

La laque présente de préférence une perméabilité à l'eau à 25°C, exprimée en cm³.cm.cm⁻².s⁻¹.Pa⁻¹ inférieure à 10⁻⁶, voire inférieure à 5.10⁻⁷, et notamment inférieure à 10⁻⁷.

Cette imperméabilité à l'eau permet à l'assemblage d'être plus durable en évitant la migration des plastifiants du PVB à la surface du verre qui peut occasionner des décollements de laque. En outre, le PVB a la particularité d'absorber l'eau ; en milieu humide (par exemple en salle de bains), l'eau contenue dans le PVB peut conduire à un décollement au niveau des bords si la perméabilité à l'eau de la laque est trop élevée.

Pour assurer une parfaite adhésion et une tenue mécanique, notamment une résistance au cisaillement, sur de longues durées, il est même préférable que la laque présente une perméabilité à l'eau à 25°C inférieure à 10⁻⁸, voire 10⁻⁹, et même 10⁻¹⁰ cm³.cm.cm⁻².s⁻¹.Pa⁻¹. Les vitrages selon l'invention étant dans certains cas destinés à être posés dans des lieux dont l'ambiance est humide (par exemple en salle de bains), il est même préférable que la perméabilité à l'eau de la laque soit inférieure à 10⁻¹¹, voire 10⁻¹², et même 10⁻¹³ cm3.cm.cm⁻².s⁻¹.Pa⁻¹.

La perméabilité à l'eau est définie comme le produit de la quantité de vapeur d'eau diffusant à travers un matériau (en cm³) par l'épaisseur de matériau (en cm) rapportée au produit de la surface exposée (en cm²) par le temps d'exposition (en secondes) et par la différence de pression (en Pascal) entre les deux faces du matériau. Elle peut être mesurée par exemple par mesure de la prise de masse d'un film de laque après exposition dans une étuve climatique dont le degré d'humidité est contrôlé.

Cette grandeur, dans le cas d'un polymère, dépend au premier ordre de la nature chimique du polymère, puis de sa morphologie, laquelle dépend par exemple du taux de réticulation (via par exemple le taux d'agent réticulant et/ou la température de réticulation), du taux de cristallisation, d'une éventuelle orientation des molécules. Elle dépend également, le cas échéant, de la nature et de la quantité de charges minérales.

La laque est donc de préférence sous forme liquide avant dépôt et adaptée au séchage en four. Il a été observé que les laques comprenant des liants séchés à haute température (au-dessus de 50°C, voire même de 100°C) présentaient assez généralement une perméabilité plus faible que des liants séchés sous air à température ambiante, probablement du fait de réactions de réticulation, par exemple par polycondensation, plus abouties et donnant naissance à des réseaux tridimensionnels de plus forte densité.

Un agent promoteur d'adhésion est de préférence présent, sous forme de couche interposée entre la couche de laque et une feuille de verre et/ou entre la couche de laque et la feuille intercalaire polymère, et/ou dispersé dans la laque. Cette couche est de préférence à base de silanes qui permettent d'éviter les risques de décollement dus à l'humidité et, le cas échéant, d'améliorer l'adhésion entre la couche de laque et la feuille intercalaire polymère. Des agents promoteurs d'adhésion avec le verre, comme des silanes, peuvent également être dispersés dans la laque.

La laque comprend des pigments, minéraux et/ou organiques, de préférence minéraux, afin de conférer les propriétés esthétiques voulues. Ces pigments sont de préférence du type résistant au rayonnement ultraviolet et à l'humidité. Parmi les pigments employés dans le cadre de la présente invention, on trouve par exemple des oxydes de titane ou de zirconium éventuellement dopés par des ions d'éléments de transition, ou encore des oxydes mixtes du type zircon (ZrSiO₄). Les pigments sont de préférence exempts de métaux lourds tels que le cadmium ou le plomb. La couche de laque est opaque.

La laque peut également contenir des charges minérales destinées à optimiser ses paramètres physico-chimiques, par exemple sa viscosité. La teneur totale en espèces minérales (pigments et charges) de la laque est de préférence, exprimée en pourcentage massique par rapport à l'extrait sec, comprise entre 40 et 70%, voire entre 50 et 60%.

La laque du vitrage selon l'invention peut être déposée avec tout type de procédé connu de l'homme du métier, comme le rideau, la pulvérisation pneumatique, la sérigraphie ou le roll-coating. Le procédé de sérigraphie présente l'avantage de pouvoir ne revêtir qu'une partie du substrat. Le procédé de roll-coating consiste à faire passer le substrat à recouvrir entre deux rouleaux, dont l'un (en général le rouleau supérieur) est enduit de laque. Pour des raisons de coût, le procédé employé est de préférence le rideau dans lequel on crée un écoulement de laque sur une ligne sensiblement perpendiculaire à la direction de défilement des substrats en verre, permettant ainsi de revêtir toute la surface desdits substrats. Le débit de laque et la vitesse de défilement du substrat sont réglés de manière à obtenir un dépôt de l'épaisseur désirée, de préférence 100 à 200 micromètres à l'état humide. Le substrat revêtu de la laque est ensuite soumis à un traitement thermique permettant de durcir la laque, plus précisément d'évacuer le solvant et d'effectuer les réactions de polymérisation et/ou de réticulation des résines employées comme liant. La température employée est de préférence comprise entre 50 et 250°C, notamment entre 100 et 200°C afin de conférer à la laque un degré de réticulation apte à diminuer sa perméabilité à l'eau. L'épaisseur de la couche de laque après durcissement est de préférence comprise entre 20 et 100 micromètres, notamment entre 40 et 70 micromètres afin d'obtenir l'opacité désirée.

La ou chaque feuille de verre employée peut être tout type de verre plat, (éventuellement bombé par les procédés de bombage connus de l'homme du métier, lorsqu'il s'agit de revêtir des surfaces courbes). Il peut s'agir de verres monolithiques, c'est-à-dire composés d'une seule feuille de verre, laquelle peut être produite par le procédé float permettant d'obtenir une feuille parfaitement plane et lisse, ou par des procédés d'étirage ou de laminage. Dans ce dernier cas, et lorsque les rouleaux lamineurs présentent des formes en relief, la feuille de verre peut être imprimée et présenter des motifs (par exemple comme enseigné dans le document de brevet EP 493 202) sur au moins une de ses faces, de préférence la face support de la laque (ou face interne).

La feuille de verre peut être trempée ou non. Une feuille non-trempée présente l'avantage de pouvoir être découpée.

Le verre peut être clair ou présenter des teintes diverses telles que le bleu, le bronze, le vert, le gris, ou encore le rose. La transmission lumineuse du verre peut être choisie entre 10 et 92% pour une épaisseur de 4 mm. Un mode de réalisation particulièrement préféré, notamment dans le cas où la laque est blanche ou de couleur très claire, par exemple ivoire, consiste à utiliser comme substrat verrier une feuille de verre extra-clair, c'est-à-dire dont la teneur en oxyde de fer est inférieure à 250 ppm, de préférence inférieure ou égale à 200 ppm, voire à 150 ppm, et dont la transmission lumineuse sous illuminant D65 est supérieure à 89%, notamment 90% pour une épaisseur de 4mm. Il a été trouvé que les propriétés optiques d'un tel verre permettaient d'obtenir un excellent rendu de la couleur blanche ou ivoire de la laque alors que la teinte résiduelle verte des verres clairs courants, dont la teneur en oxyde de fer est de l'ordre de 1000 ppm est particulièrement mise en évidence.

L'épaisseur de la ou chaque feuille de verre est de préférence comprise entre 2 et 19 mm, de préférence entre 2 et 6 mm, plus particulièrement entre 2 et 5 mm. Des feuilles de verre dont l'épaisseur est d'environ 3 mm ou 4 mm sont préférées, notamment dans des assemblages où chaque feuille de verre présente la même épaisseur.

La ou chaque feuille de verre peut être rendue mate sur au moins une des faces (de préférence la face externe) par divers procédés de matage, par exemple le matage à l'acide fluorhydrique ou le sablage. Ce matage peut être réalisé sur l'intégralité de la face ou sur des zones particulières, créant ainsi des motifs mats légèrement en creux. Ce dernier mode de réalisation peut être effectué en protégeant les zones qui ne seront pas gravées par un revêtement résistant aux acides qui sera ensuite ôté. L'aspect mat peut également être obtenu par dépôt d'un émail organique ou minéral.

Une couche réfléchissante, de préférence une couche d'argent, notamment obtenue par les procédés d'argenture connus de l'homme du métier peut également être interposée entre la ou chaque feuille de verre (éventuellement pourvue de promoteurs d'adhésion du type silanes) et la couche de laque, cette dernière remplissant alors la fonction de vernis protégeant la couche d'argent de la corrosion. On peut ainsi obtenir une cloison ayant d'un côté l'apparence d'un miroir et de l'autre côté l'apparence d'un verre laqué.

Un décor d'une ou plusieurs couleurs obtenu par des techniques de sérigraphie ou jet d'encre est avantageusement interposé entre la ou chaque feuille de verre (éventuellement pourvue de promoteurs d'adhésion du type silanes) et la laque, et/ou en face externe. On peut par exemple combiner l'application de décors en face interne et en face externe.

La ou chaque feuille de verre peut également être revêtue de couches fonctionnelles telles que des empilements de couches anti-reflet, des couches à fonctionnalité auto-nettoyante (par exemple contenant de l'oxyde de titane préférentiellement cristallisé sous forme anatase et/ou rutile, qui présentent également des propriétés anti-salissure, anti-bactériennes, anti-buée et anti-condensation), ou encore des couches hydrophobes. Des couches conférant des propriétés anti-dérapantes, notamment sous forme d'émail, sont particulièrement appréciées dans le cas de revêtements de sols. Des couches anti-abrasion ou anti-rayures peuvent également revêtir la ou chaque feuille de verre du vitrage selon l'invention. La ou chaque feuille de verre peut également être revêtue d'au moins une couche semi-réfléchissante, la couleur présentant alors un aspect légèrement métallisé.

Des couches conductrices de l'électricité et donc chauffantes par effet Joule peuvent être intégrées sur une des faces du vitrage, ce qui permet par exemple d'obtenir des sols et/ou des murs chauffants. La feuille intercalaire peut également comprendre des cristaux liquides susceptibles de s'orienter sous l'action d'un champ électrique, en permettant le passage d'un état translucide ou opaque à un état transparent, pouvant par exemple révéler un décor particulier situé en face arrière.

Des diodes électroluminescentes peuvent également être disposées entre la feuille intercalaire polymère et au moins une des feuilles de verre du vitrage.

L'invention a aussi pour objet un procédé d'obtention d'un vitrage selon l'invention, comprenant les étapes consistant à placer au moins une feuille intercalaire polymère entre au moins une feuille de verre préalablement revêtue d'une couche de laque opaque et au moins une autre feuille de verre, puis à soumettre l'ensemble à un traitement thermique sous pression afin d'assurer la liaison entre lesdites feuilles de verre. Le traitement thermique est typiquement réalisé selon les méthodes connues de l'homme du métier pour le feuilletage du verre, en autoclave, à une pression comprise entre 0,9 et 1,4 MPa (9 et 14 bars) et une température comprise entre 100 et 150°C. Le procédé est moins coûteux et plus facilement réalisable que ceux décrits dans l'art antérieur, puisqu'il n'est pas nécessaire de modifier les paramètres utilisés habituellement pour le feuilletage du verre, où deux feuilles de verre non revêtues sont feuilletées à l'aide de PVB.

Afin d'optimiser l'adhésion entre la couche de laque et la feuille intercalaire polymère, on soumet de préférence la couche de laque à l'action d'un plasma, notamment par un traitement du type décharge couronne, avant traitement thermique. Dans le même but, il est également possible de déposer sur la couche de laque des silanes, par exemple par pulvérisation ou chiffonnage. Ces traitements permettent d'utiliser des laques dont l'adhésion avec les feuilles intercalaires polymères est naturellement faible. Ils génèrent néanmoins un surcoût et ne sont de ce fait pas préférés.

L'invention a encore pour objet une cloison, porte (encadrée ou non), vitrage d'ameublement, plafond, garde-corps, couvercle de luminaire, revêtement de murs, marche d'escalier, incorporant un vitrage selon l'invention. La cloison peut être fixe ou sous forme de panneaux coulissants, par exemple montés sur des rails. La porte peut être une porte d'intérieur ou d'extérieur ou encore une porte de douche.

La présente invention sera mieux comprise à la lecture de la description détaillée ci-après d'exemples de réalisation non limitatifs illustrés par les figures ci-jointes :

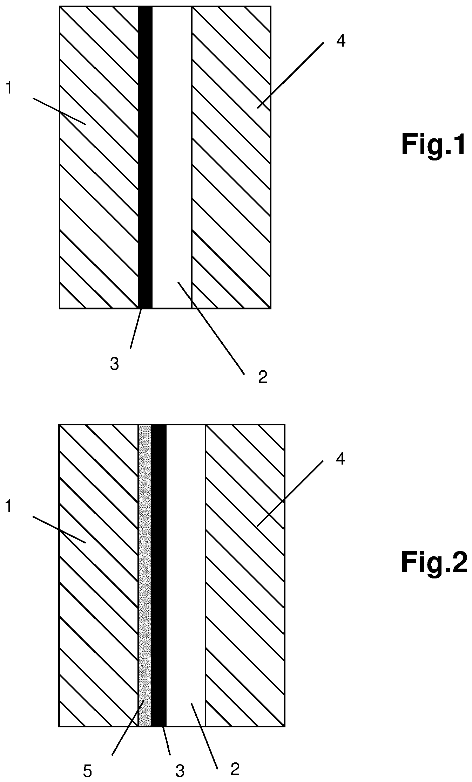

La figure 1 représente schématiquement un vitrage selon l'invention, constitué d'une première feuille de verre 1 revêtue d'une couche de laque opaque 3 et d'une seconde feuille de verre 4, l'ensemble étant lié par une feuille intercalaire 2 en PVB.
La figure 2 représente schématiquement un vitrage selon l'invention, identique à celui de la figure 1, mis à part qu'une couche réfléchissante 5 en argent est déposée entre la feuille de verre 1 et la couche de laque 3.

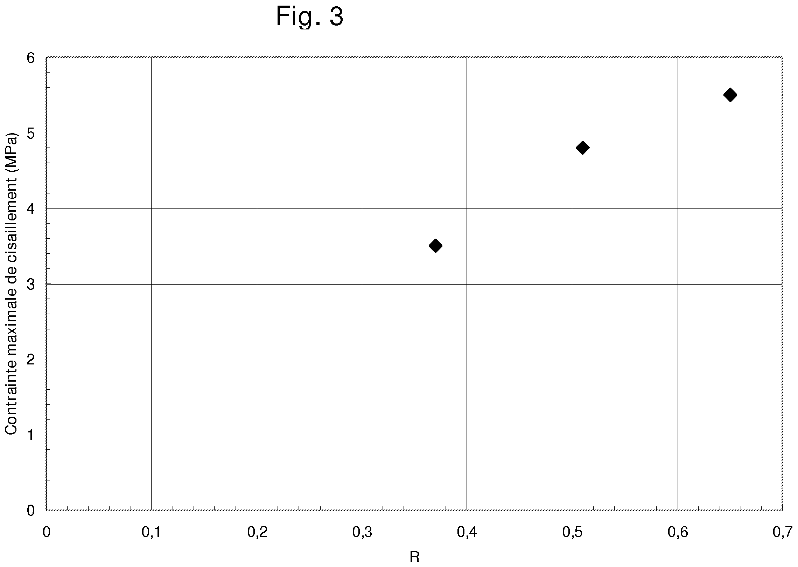

La figure 3 montre, pour des laques comprenant des liants acryliques ou polyuréthanes, la relation entre d'une part le rapport noté R entre les aires des bandes d'absorption liées aux groupements hydroxyles et les aires des bandes d'absorption liées aux groupements alkyles ou alcanes et d'autre part la contrainte maximale de cisaillement (en MPa), laquelle caractérise l'adhésion entre la laque et le PVB. Les laques présentant en surface une plus grande densité de groupements hydroxyles sont les plus satisfaisantes en termes d'adhésion, et donc celles qui présentent le moins de risque de délamination.

Les feuilles de verre 1 et 4 sont en verre du type silico-sodo-calcique, clair, monolithique, plan et non-trempé, présentant une épaisseur de 4 mm. De telles feuilles sont par exemple commercialisées sous la marque SGG Planilux® par la demanderesse. La face interne de la feuille de verre 1 a été préalablement revêtue d'une couche de laque 3 de 50 micromètre d'épaisseur, déposée selon le procédé du rideau.

La couche de laque 3 comprend après séchage les ingrédients suivants :
- un liant sous forme de résine acrylique thermodurcissable réticulée avec de la mélamine (résine A) ou avec un isocyanate (résine B),
- des matières minérales (pigments et charges) en une teneur comprise entre 40 et 70% en masse par rapport à l'extrait sec.

La couche de laque 3 obtenue à l'aide de la résine A présente une tension de surface de l'ordre de 36 à 38 N/mm² et une rugosité R_{z} d'environ 55 micromètres. Pour la résine B, les valeurs obtenues sont de l'ordre de 42 à 48 N/mm² pour la tension de surface et d'environ 50 micromètres pour la rugosité R_{z}. La tension de surface est mesurée à l'aide d'encres de test commercialisées par la société Plasmatreat GmbH. Par mesure en spectrométrie infrarouge de type ATR, le rapport entre les aires des bandes d'absorption liées aux groupements hydroxyles et les aires des bandes d'absorption liées aux groupements alkyles ou alcanes est supérieur à 0,6, témoignant d'une forte densité de groupements hydroxyles en surface de la laque.

La feuille intercalaire 2 est en PVB transparent et incolore de 0,76 mm d'épaisseur, commercialisé sous la référence Saflex RB41 par la société Solutia. Le feuilletage se fait selon les techniques couramment employées dans le domaine : les deux feuilles de verre 1 et 4 sont assemblées, la feuille intercalaire 2 en PVB étant disposée entre lesdites feuilles de verre. L'air éventuellement contenu entre les feuilles constitutives du vitrage est ensuite éliminé, par exemple par calandrage et/ou ou dépression. La liaison est ensuite réalisée en autoclave, sous pression d'environ 1,2 MPa (12 bars), à une température d'environ 140°C.

Le vitrage est apte à être utilisé comme cloison, car il répond aux différentes normes existantes. Il est notamment classifié 2B2 au sens de la norme EN 12600 (résistance au choc) et répond aux exigences de la norme EN 14449 :2005 (conformité des verres feuilletés).

L'adhésion entre le PVB et les feuilles de verre est caractérisée par une mesure de torsion telle que décrite dans la demande WO 03/087785. La contrainte maximale de cisaillement (avant amorçage d'une dissociation entre le PVB et la feuille de verre revêtue de la couche de laque) est très satisfaisante puisque comprise entre 4 et 6 MPa.

Pour une autre couche de laque 3, dont le rapport R entre les aires des bandes d'absorption liées aux groupements hydroxyles et les aires des bandes d'absorption liées aux groupements alkyles ou alcanes est de l'ordre de 0,3, ce qui témoigne d'une densité de groupements hydroxyles plus faible en surface, l'adhésion est moins bonne, puisque la contrainte maximale de cisaillement est de 1,5 MPa. Une telle adhésion est susceptible, dans certaines conditions extrêmes, de générer des problèmes de durabilité, notamment dus à des délaminations.

Le vitrage selon l'invention résiste également aux températures élevées au sens de la norme EN 12543-4, puisqu'après traitement à 100°C pendant 2 heures, aucun défaut (du type bulle, opacification ou délamination) n'est observé côté PVB, et aucun point de décollement ni changement de couleurs ne sont observés côté laque.

Aucun des ces défauts n'est également observable après test à l'humidité selon la norme EN 12543-4 (ruissellement d'eau à 50°C pendant 14 jours) ou test de vieillissement aux UV selon la norme EN 12543-4.

## Revendications

1. Vitrage feuilleté comprenant au moins deux feuilles de verre (1, 4) et au moins une feuille intercalaire polymère (2) assurant une liaison entre lesdites feuilles de verre (1, 4), au moins une couche de laque opaque (3) étant disposée entre les au moins deux feuilles de verre (1, 4), la ou chaque couche de laque opaque (3) étant déposée sur une feuille de verre (1), la ou chaque couche de laque (3) étant un revêtement opaque comprenant au moins une résine polymérique et au moins un pigment, **caractérisé en ce que** la feuille intercalaire polymère (2) est constituée de polyvinylbutyral.

2. Vitrage selon la revendication 1, tel que la ou chaque couche de laque (3) est en contact avec la ou chaque feuille intercalaire polymère (2).

3. Vitrage selon l'une des revendications précédentes, tel que la feuille intercalaire polymère est transparente.

4. Vitrage selon l'une des revendications précédentes, constitué de deux feuilles de verre (1, 4), d'une couche de laque (3) déposée sur une première feuille de verre (1), et d'une feuille intercalaire polymère (2) en contact avec ladite couche de laque (3) et assurant la liaison entre ladite première feuille de verre (1) et une seconde feuille de verre (4).

5. Vitrage selon l'une des revendications précédentes, tel que la couche de laque (3) présente une rugosité comprise entre 10 et 90 micromètres, notamment entre 45 et 70 micromètres.

6. Vitrage selon l'une des revendications précédentes, tel que la laque (3) comprend un liant à base de résine acrylique, notamment réticulée avec de la mélamine et/ou un isocyanate.

7. Vitrage selon l'une des revendications précédentes, tel que la laque (3) présente une perméabilité à l'eau inférieure à 10⁻⁶, notamment inférieure à 10⁻⁸, voire inférieure à 10⁻¹³ cm³.cm.cm⁻².s⁻¹.Pa⁻¹.

8. Vitrage selon l'une des revendications précédentes, tel qu'un agent promoteur d'adhésion, notamment à base de silanes, est présent, sous forme de couche interposée entre la couche de laque (3) et une feuille de verre (1) et/ou entre la couche de laque (3) et la feuille intercalaire polymère (2), et/ou dispersé dans la laque (3).

9. Vitrage selon l'une des revendications précédentes, tel qu'une couche réfléchissante (5), notamment d'argenture pour miroirs, et/ou un décor susceptible d'être obtenu par sérigraphie ou jet d'encre (5) est interposé entre la couche de laque (3) et une feuille de verre (1), éventuellement revêtu d'une couche promotrice d'adhésion.

10. Vitrage selon l'une des revendications précédentes, tel que la couche de laque (3) comprend des pigments résistant au rayonnement ultraviolet et/ou des charges minérales dans une teneur comprise entre 40 et 70%.

11. Vitrage selon l'une des revendications précédentes, tel que la ou chaque feuille de verre (1, 4) présente sur au moins une de ses faces des motifs en relief susceptibles d'être obtenus par laminage et/ou matage à l'acide et/ou sablage et/ou gravure, ou tel que l'intégralité de la face extérieure de la ou chaque feuille de verre (1, 4) est matée à l'acide fluorhydrique ou par sablage.

12. Vitrage selon l'une des revendications précédentes, tel que la ou chaque feuille de verre (1, 4) présente sur au moins une de ses faces, de préférence en face extérieure, au moins une couche fonctionnelle conférant des propriétés optiques et/ou anti-dérapantes et/ou de surface, notamment des propriétés antisalissures, antibactériennes, autonettoyantes, hydrophobes, anti-buée, anti-rayures, anti-abrasion.

13. Vitrage selon l'une des revendications précédentes, dans lequel des diodes électroluminescentes sont disposées entre la feuille intercalaire polymère (2) et au moins une feuille de verre (1, 4).

14. Procédé d'obtention d'un vitrage selon l'une des revendications précédentes, comprenant les étapes consistant à placer au moins une feuille intercalaire polymère (2) constituée de polyvinylbutyral entre au moins une feuille de verre (1) revêtue d'une couche de laque opaque (3) et au moins une autre feuille de verre (4), puis à soumettre l'ensemble à un traitement thermique sous pression afin d'assurer la liaison entre lesdites feuilles de verre (1, 4).

15. Procédé selon la revendication 14, tel que la couche de laque (3) présente au moins en sa surface des fonctions chimiques susceptibles de réagir chimiquement avec les fonctions hydroxyles et/ou carbonyles.

16. Procédé selon l'une des revendications de procédé précédentes, tel que la laque est telle que, par mesure en spectrométrie infrarouge de type ATR, le rapport entre les aires des bandes d'absorption liées aux groupements hydroxyles et les aires des bandes d'absorption liées aux groupements alkyles ou alcanes soit supérieur ou égal à 0,4, notamment 0,5 ou 0,6.

17. Procédé selon l'une des revendications de procédé précédentes, tel que la couche de laque (3) présente une tension de surface comprise entre 30 et 70 N/mm², notamment entre 32 et 50 N/mm².

18. Procédé selon la revendication précédente, dans lequel on soumet la couche de laque (3) à l'action d'un plasma, notamment par un traitement du type décharge couronne, avant traitement thermique.

19. Cloison, porte, vitrage d'ameublement, plafond, garde-corps, couvercle de luminaire, revêtement de murs, marche d'escalier, incorporant un vitrage selon l'une des revendications 1 à 13.

## Patentansprüche

1. Verbundverglasung, umfassend mindestens zwei Glasscheiben (1, 4) und mindestens eine polymere Zwischenscheibe (2), die eine Verbindung zwischen den Glasscheiben (1, 4) sicherstellt, wobei zwischen den mindestens zwei Glasscheiben (1, 4) mindestens eine Schicht aus opakem Lack (3) angeordnet ist, wobei die oder jede Schicht (3) aus opakem Lack auf einer Glasscheibe (1) aufgebracht ist, wobei die oder jede Lackschicht (3) eine opake Beschichtung ist, die mindestens ein Polymerharz und mindestens ein Pigment umfasst, **dadurch gekennzeichnet, dass** die polymere Zwischenscheibe (2) aus Polyvinylbutyral besteht.

2. Verglasung nach Anspruch 1, wobei die oder jede Lackschicht (3) mit der oder jeder polymeren Zwischenscheibe (2) in Kontakt ist.

3. Verglasung nach einem der vorstehenden Ansprüche, wobei die polymere Zwischenscheibe transparent ist.

4. Verglasung nach einem der vorstehenden Ansprüche, bestehend aus zwei Glasscheiben (1, 4), einer Lackschicht (3), die auf einer ersten Glasscheibe (1) aufgebracht ist, und einer polymeren Zwischenscheibe (2), die mit der Lackschicht (3) in Kontakt steht und die Verbindung zwischen der ersten Glasscheibe (1) und einer zweiten Glasscheibe (4) sicherstellt.

5. Verglasung nach einem der vorstehenden Ansprüche, wobei die Lackschicht (3) eine Rauigkeit zwischen 10 und 90 Mikrometern, insbesondere zwischen 45 und 70 Mikrometern aufweist.

6. Verglasung nach einem der vorstehenden Ansprüche, wobei der Lack (3) ein Bindemittel auf Acrylharzbasis, insbesondere vernetzt mit Melamin und/oder einem Isocyanat, umfasst.

7. Verglasung nach einem der vorstehenden Ansprüche, wobei der Lack (3) eine Wasserdurchlässigkeit von weniger als 10⁻⁶, insbesondere weniger als 10⁻⁸, oder sogar weniger als 10⁻¹³ cm³.cm.cm⁻².s⁻¹.Pa⁻¹ aufweist.

8. Verglasung nach einem der vorstehenden Ansprüche, wobei ein haftungsförderndes Mittel, insbesondere auf der Basis von Silanen, in Form einer zwischen der Lackschicht (3) und einer Glasscheibe (1) und/oder zwischen der Lackschicht (3) und der polymeren Zwischenscheibe (2) eingebrachten Schicht vorliegt und/oder in dem Lack (3) dispergiert ist.

9. Verglasung nach einem der vorstehenden Ansprüche, wobei zwischen der Lackschicht (3) und einer Glasscheibe (1) eine reflektierende Schicht (5), insbesondere eine Versilberung für Spiegel, und/oder ein durch Sieb- oder Tintenstrahldruck erzielbares Dekor (5), gegebenenfalls beschichtet mit einer haftungsfördernden Schicht, eingebracht ist.

10. Verglasung nach einem der vorstehenden Ansprüche, wobei die Lackschicht (3) UV-beständige Pigmente und/oder mineralische Füllstoffe in einem Anteil zwischen 40 und 70 % umfasst.

11. Verglasung nach einem der vorstehenden Ansprüche, wobei die oder jede Glasscheibe (1, 4) auf mindestens einer ihrer Flächen Reliefmuster aufweist, die durch Laminieren und/oder Säuremattieren und/oder Sandstrahlen und/oder Gravieren erzielbar sind, oder wobei die gesamte Außenfläche der oder jeder Glasscheibe (1, 4) mit Fluorwasserstoffsäure oder durch Sandstrahlen mattiert ist.

12. Verglasung nach einem der vorstehenden Ansprüche, wobei die oder jede Glasscheibe (1, 4) auf mindestens einer ihrer Flächen, vorzugsweise auf der Außenfläche, mindestens eine Funktionsschicht aufweist, die optische und/oder rutschhemmende und/oder Oberflächeneigenschaften verleiht, insbesondere anwuchsverhindernde, antibakterielle, selbstreinigende, hydrophobe, beschlaghemmende, kratzfeste, abriebfeste Eigenschaften.

13. Verglasung nach einem der vorstehenden Ansprüche, wobei zwischen der polymeren Zwischenscheibe (2) und mindestens einer Glasscheibe (1, 4) Leuchtdioden angeordnet sind.

14. Verfahren zur Erzielung einer Verglasung nach einem der vorstehenden Ansprüche, umfassend die Schritte bestehend aus dem Anordnen mindestens einer polymeren Zwischenscheibe (2), die aus Polyvinylbutyral besteht, zwischen mindestens einer Glasscheibe (1), die mit einer Schicht (3) aus opakem Lack beschichtet ist, und mindestens einer anderen Glasscheibe (4), und anschließendem Unterziehen der Anordnung einer Wärmebehandlung unter Druck, um die Verbindung zwischen den Glasscheiben (1, 4) sicherzustellen.

15. Verfahren nach Anspruch 14, wobei die Lackschicht (3) mindestens an ihrer Oberfläche chemische Funktionen aufweist, die in der Lage sind, mit Hydroxyl- und/oder Carbonylfunktionen chemisch zu reagieren.

16. Verfahren nach einem der vorstehenden Verfahrensansprüche, wobei der Lack so beschaffen ist, dass bei der Messung in der Infrarotspektrometrie vom Typ ATR das Verhältnis zwischen den Flächen der mit den Hydroxylgruppen verbundenen Absorptionsbanden und den Flächen der mit den Alkyl- oder Alkan-Gruppen verbundenen Absorptionsbanden größer als oder gleich 0,4, insbesondere 0,5 oder 0,6 ist.

17. Verfahren nach einem der vorstehenden Verfahrensansprüche, wobei die Lackschicht (3) eine Oberflächenspannung zwischen 30 und 70 N/mm², insbesondere zwischen 32 und 50 N/mm² aufweist.

18. Verfahren nach dem vorstehenden Anspruch, wobei die Lackschicht (3) vor der Wärmebehandlung der Einwirkung eines Plasmas, insbesondere durch eine Behandlung vom Typ Koronaentladung, unterworfen wird.

19. Trennwand, Tür, Möbelverglasung, Decke, Geländer, Lichtabdeckung, Wandverkleidung, Treppenstufe, mit einer Verglasung nach einem der Ansprüche 1 bis 13.

## Claims

1. Laminated glazing comprising at least two glass sheets (1, 4) and at least one polymer interlayer (2) bonding said glass sheets (1, 4) together, at least one film of opaque lacquer (3) being placed between the at least two glass sheets (1, 4), the or each film of opaque lacquer (3) being deposited on a glass sheet (1), the or each film of lacquer (3) being an opaque coating comprising at least one polymeric resin and at least one pigment, **characterized in that** the polymer interlayer (2) is made of polyvinyl butyral.

2. The glazing as claimed in claim 1, such that the or each film of lacquer (3) is in contact with the or each polymer interlayer (2).

3. The glazing as claimed in either of the preceding claims, such that the polymer interlayer is transparent.

4. The glazing as claimed in one of the preceding claims, consisting of two glass sheets (1, 4), a film of lacquer (3) deposited on a first glass sheet (1) and a polymer interlayer (2) which is in contact with said film of lacquer (3) and provides the bond between said first glass sheet (1) and a second glass sheet (4).

5. The glazing as claimed in one of the preceding claims, such that the film of lacquer (3) has a roughness of between 10 and 90 microns, especially between 45 and 70 microns.

6. The glazing as claimed in one of the preceding claims, such that the lacquer (3) includes an acrylic-resin-based binder, said lacquer being in particular crosslinked with melamine and/or an isocyanate.

7. The glazing as claimed in one of the preceding claims, such that the lacquer (3) has a water permeability of less than 10⁻⁶, especially less than 10⁻⁸ or even less than 10⁻¹³ cm³.cm.cm⁻².s⁻¹.Pa⁻¹.

8. The glazing as claimed in one of the preceding claims, such that an adhesion promoter, especially a silane-based one, is present in the form of a film interposed between the film of lacquer (3) and a glass sheet (1) and/or between the film of lacquer (3) and the polymer interlayer (2), and/or dispersed in the lacquer (3).

9. The glazing as claimed in one of the preceding claims, such that a reflecting film (5), especially a mirror silvering film, and/or a screen-printed or inkjet-printed decoration (5) is interposed between the film of lacquer (3) and a glass sheet (1), said reflecting film and/or decoration being optionally coated with an adhesion-promoting film.

10. The glazing as claimed in one of the preceding claims, such that the film of lacquer (3) comprises pigments resistant to ultraviolet radiation and/or mineral fillers in a content of between 40 and 70%.

11. The glazing as claimed in one of the preceding claims, such that the or each glass sheet (1, 4) has, on at least one of its faces, raised features obtained by rolling and/or acid frosting and/or sandblasting and/or etching, or such that the entire external face of the or each glass sheet (1, 4) is frosted by hydrochloric acid or by sandblasting.

12. The glazing as claimed in one of the preceding claims, such that the or each glass sheet (1, 4) has, on at least one of its faces, preferably its external face, at least one functional layer conferring optical and/or nonslip and/or surface properties, especially antisoiling, antibacterial, self-cleaning, hydrophobic, antifogging, scratch-resistant and abrasion-resistant properties.

13. The glazing as claimed in one of the preceding claims, in which light-emitting diodes are placed between the polymer interlayer (2) and at least one glass sheet (1, 4).

14. A method of obtaining glazing as claimed in one of the preceding claims, comprising the steps consisting in placing at least one polymer interlayer (2) between at least one glass sheet (1) coated with a film of lacquer (3) and at least one other glass sheet (4) and then in subjecting the assembly to a thermocompression treatment so as to bond said glass sheets (1, 4) together.

15. The method as claimed in claim 14, such that the film of lacquer (3) has, at least on its surface, chemical functional groups capable of chemically reacting with hydroxyl and/or carbonyl functional groups.

16. The method as claimed in one of the preceding method claims, in which the lacquer is such that, by measurement using ATR infrared spectroscopy, the ratio of the areas of the absorption bands associated with the hydroxyl groups to the areas of the absorption bands associated with the alkyl or alkane groups is equal to or greater than 0.4, especially 0.5 or 0.6.

17. The method as claimed in one of the preceding method claims, such that the film of lacquer (3) has a surface tension of between 30 and 70 N/mm², especially between 32 and 50 N/mm².

18. The method as claimed in the preceding claim, in which the film of lacquer (3) is subjected to the action of a plasma, especially by a corona discharge treatment, before the thermocompression treatment.

19. A partition, door, furniture glazing, ceiling, balustrade, luminaire cover, wall covering or staircase step, which incorporates glazing as claimed in one of claims 1 to 13.
